# EUROPEAN PATENT APPLICATION

(11) **EP 3 623 132 A1**
(43) Date of publication of application: **18.03.2020**
(21) Application number: 18194016.4
(22) Date of filing: 12.09.2018
(51) Int. Cl.: B29C 45/14

(54) **METHOD FOR PRODUCING DECORATIVE PART FOR VEHICLE INTERIOR TRIM**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a method for producing a decorative part for vehicle interior trim, which is characterized by comprising the following steps: I) a softened decorative film is adhered to an inner surface of a decorative part mold and molded into a decorative film having the shape of a decorative part, wherein the decorative film has a thickness of at least 0.2 mm; II) scrap edges of the decorative film having the shape of the decorative part are removed; III) the decorative film having the shape of the decorative part from which the scrap edges have been removed is placed again in the decorative part mold and adhered to the inner surface of the decorative part mold; and IV) a body material of the decorative part is injected into the decorative part mold by a physical foaming injection molding process and molded into the decorative part together with the decorative film. In the present invention, a decorative part for vehicle interior trim which has light weight and excellent appearance can be obtained by a combination of a physical foaming injection molding process and an insert-mold process.

## Description

### FIELD OF THE INVENTION

The present invention relates to the technical field of vehicle parts processing, and particularly to a method for producing a decorative part for vehicle interior trim.

### BACKGROUND ART

In response to environmental protection and emission reduction policies, many industries are actively looking for some lightweight solutions, especially in the automobile industry. Some automotive OEMs have targeted at parts for interior trim and planned to achieve the purpose of reducing weight by means of reducing the thickness of parts for automotive interior trim, wherein visual parts for automotive interior trim are also considered.

Due to the well-known limitations of injection molding conditions, the reduction in the thickness of visual parts for automotive interior trim may greatly limit the processing size while resulting in shrink marks on the surface due to structural design.

A physical foaming injection molding process has been introduced to solve these problems.

The physical foaming injection molding process is a mainstream foaming process in the market. In plastic processing, nitrogen (N₂) or carbon dioxide (CO₂) is used as a foaming agent. The gas is first converted into a supercritical state such that the gas is incompressible like liquid, but can be integrated into a plastic melt due to the diffusion characteristics of gas, and then quantitatively injected into a plastic melt by a plasticizing device of an injection molding machine to form a supercritical fluid of the gas and the plastic melt. The fluid can greatly increase the flow length of the plastic melt. When the fluid is injected into a mold cavity and the melt contacts the mold surface, microbubbles in the supercritical fluid continuously grow in an intermediate layer of a part and finally form an evenly distributed cell structure. Meanwhile, the formation of a foamed intermediate layer can reduce the plastic shrinkage, thereby reducing or eliminating the shrink marks on the surface of a plastic article.

In addition, the physical foaming injection molding process can also bring many benefits to the end customers of injection-molded plastic parts. For example, 1) the process is suitable for processing different materials; 2) the wall thickness and density of parts can be reduced such that the weight of the parts can be reduced by 20%-40%, depending on the geometry and material type of the parts; 3) articles have low warpage after injection molding; and 4) the process has low energy consumption relative to a standard injection molding process. However, the physical foaming injection molding process also brings certain disadvantages to molded parts, for example, loss in mechanical properties, especially notched impact strength, and obvious surface defects such as micropore exposure and air streaks on the surface, thus failing to meet the appearance quality requirements of parts for vehicle interior trim.

Since parts for vehicle interior trim are partly visible from the outside or inside of vehicles once mounted on the vehicles, these parts are also known as "decorative parts".

Therefore, there is still a need in the field for a method capable of producing a decorative part for vehicle interior trim which has light weight and excellent appearance.

### SUMMARY OF THE INVENTION

The present invention is intended to provide a method for producing a decorative part for vehicle interior trim which has light weight and excellent appearance.

This is achieved by a method according to claim 1 and a decorative part according to claim 14. Advantageous embodiments are the subject of the dependent claims. They can be combined freely unless the context clearly indicates otherwise.

Therefore, according to a first aspect of the present invention, there is provided a method for producing a decorative part for vehicle interior trim, which comprises the following steps:
I) a softened decorative film is adhered to an inner surface of a decorative part mold and molded into a decorative film having the shape of a decorative part, wherein the decorative film has a thickness of at least 0.2 mm;
II) scrap edges of the decorative film having the shape of the decorative part are removed;
III) the decorative film having the shape of the decorative part from which the scrap edges have been removed is placed again in the decorative part mold and adhered to the inner surface of the decorative part mold; and
IV) a body material of the decorative part is injected into the decorative part mold by a physical foaming injection molding process and molded into the decorative part together with the decorative film.

According to a second aspect of the present invention, there is provided a decorative part for vehicle interior trim, which is obtained by the method of the present invention.

In the present invention, a decorative part for vehicle interior trim which has light weight and excellent appearance can be obtained by a combination of a physical foaming injection molding process and an insert-mold process.

### BRIEF DESCRIPTION OF THE DRAWINGS

The present invention will be described and explained below in more detail with reference to the drawings, in which:
Fig. 1 shows a schematic view of an apparatus and the process flow of an in-mold thermal transfer printing decoration process, wherein in Fig. 1 (a), 1 represents the retraction of an ejector pin and 2 represents film blanking; in Fig. 1 (b), 1 represents the positioning by a pressing frame and 2 represents film forming; and in Fig. 1 (d), 1 represents the pick-up by a manipulator, 2 represents the ejection of the ejector pin and 3 represents the release of the pressing frame;
Fig. 2 shows a schematic view of an apparatus and the process flow of a mold-insert decoration process;
Fig. 3 is a schematic structural view of a thermal transfer printing film used in Comparative Example 1, wherein 1 represents a PET layer, 2 represents a hardened layer, 3 represents a pattern layer and 4 represents a bonding layer;
Fig. 4 is a schematic cross-sectional structural view of a decorative part obtained in Comparative Example 2, wherein 1 represents a polycarbonate layer, 2 represents an ink layer, 3 represents a primer and 4 represents a plastic body; and
Fig. 5 is a schematic cross-sectional structural view of a decorative part obtained in Inventive Example 1, wherein 1 represents a PMMA top layer, 2 represents a printing layer, 3 represents a toughened ABS bottom layer and 4 represents a plastic body.

### DETAILED DESCRIPTION OF THE INVENTION

The present invention is now described for the purpose of illustration rather than limitation. According to a first aspect of the present invention, there is provided a method for producing a decorative part for vehicle interior trim, which comprises the following steps:
I) a softened decorative film is adhered to an inner surface of a decorative part mold and molded into a decorative film having the shape of a decorative part, wherein the decorative film has a thickness of at least 0.2 mm;
II) scrap edges of the decorative film having the shape of the decorative part are removed;
III) the decorative film having the shape of the decorative part from which the scrap edges have been removed is placed again in the decorative part mold and adhered to the inner surface of the decorative part mold; and
IV) a body material of the decorative part is injected into the decorative part mold by a physical foaming injection molding process and molded into the decorative part together with the decorative film.

The body material is one commonly used in the field for producing a decorative part for vehicle interior trim, especially a lightweight material such as plastic.

Preferably, the body material is a polycarbonate/acrylonitrile-butadiene-styrene copolymer (PC/ABS) blend.

More preferably, the polycarbonate/acrylonitrile-butadiene-styrene copolymer blend comprises 50-70 wt% of a polycarbonate and 30-50 wt% of an acrylonitrile-butadiene-styrene copolymer based on the total weight of the blend.

The inventor has found that when a polycarbonate/acrylonitrile-butadiene-styrene copolymer (PC/ABS) blend is used, the resulting body has excellent high-temperature resistance, low-temperature impact resistance and good dimensional stability. Especially when the polycarbonate/acrylonitrile-butadiene-styrene copolymer blend comprises 50-70 wt% of a polycarbonate and 30-50 wt% of an acrylonitrile-butadiene-styrene copolymer (based on the total weight of the blend), the resulting body has very high impact toughness. The decorative film has a thickness of preferably 0.3-1.0 mm, more preferably 0.3-0.6 mm. In some embodiments, the decorative film has a thickness of 0.5-0.8 mm.

The decorative film is preferably a multilayer structure which sequentially comprises a bottom layer contacting a body, an intermediate layer and a top layer.

The bottom layer has a thickness of preferably 0.2-0.9 mm, more preferably 0.2-0.5mm.

In some embodiments, the bottom layer has a thickness of 0.3-0.5 mm.

The bottom layer is preferably made of a material which has good adhesion to the body material and has good hiding power.

When the body material is a PC/ABS blend, the bottom layer of the multilayer structure is preferably made of an ABS material (especially a toughened ABS material) so as to have good adhesion to the body material.

The inventor has found that when the bottom layer is made of an ABS material, such material can cover the defects (such as air streaks and welding lines) on the surface of a plastic body, thus surface flaws resulting from a physical foaming injection molding process may not be visible to the naked eye.

The intermediate layer has a thickness of preferably 0.02-0.1 mm, more preferably 0.02-0.08 mm.

In some embodiments, the intermediate layer has a thickness of 0.02-0.06 mm.

The intermediate layer may be monolayer or multilayer.

The intermediate layer preferably comprises an ink layer formed of an ink coating.

In some embodiments, the intermediate layer is an ink layer formed of an ink coating.

The top layer is preferably a transparent protective layer.

The top layer has certain surface hardness (up to 1H@500 g), scratch resistance, chemical resistance and weather resistance.

The top layer is preferably made of an acrylic polymer (e.g. PMMA).

If desired, the desired motif or pattern can be printed on contact surfaces of the top layer and the intermediate layer by, for example, a silk screen printing process.

The decorative film can be prepared by, for example, a roller printing pressing process.

In some embodiments, the decorative film used is a multilayer structure with a total thickness of 0.3-0.6 mm, which sequentially comprises a bottom layer made of a toughened ABS material, an ink layer and a top layer made of PMMA, wherein the bottom layer has a thickness of 0.2-0.5 mm and the ink layer has a thickness of 0.02-0.08 mm.

In some embodiments, the decorative film used is a multilayer structure with a total thickness of 0.5-0.8 mm, which sequentially comprises a bottom layer made of a toughened ABS material, an ink layer and a top layer made of PMMA, wherein the bottom layer has a thickness of 0.3-0.5 mm and the ink layer has a thickness of 0.02-0.06 mm.

In some embodiments, the production method further comprises the step of softening the decorative film.

Those skilled in the art can determine the temperature and time required for softening according to the decorative film used.

In some embodiments, the production method further comprises the step of softening the decorative film by heating the decorative film to 120-180°C and maintaining the temperature for 10-50 s.

The physical foaming injection molding process used in the present invention is a molding process frequently used in the field, and those skilled in the art can determine the physical foaming injection molding process according to the body material used, so a detailed description thereof is omitted herein.

The design requirements of a flow passage of the decorative part mold used in the present invention are completely different from those of a standard injection mold. The diameter of a melt injection port of the decorative part mold used in the present invention is smaller than the diameter (generally 3 mm) of a standard injection port by 0.5-1 mm, and the overall diameter of its flow passage is also smaller than that of a standard flow passage (generally having a diameter of 8-10 mm) by 0.5-1 mm. The position of a pouring gate can be selected more flexibly, the structural design of a pouring gate can be more diversified, the number of pouring gates can also be greatly reduced, and the amount of materials required by a pouring system can also be greatly reduced.

According to a second aspect of the present invention, there is provided a decorative part for vehicle interior trim, which is obtained by the method of the present invention.

The terms "comprising" and "including" described in present application cover the circumstances which further comprise or include other elements not specifically mentioned and the circumstances consisting of the elements mentioned.

Unless otherwise defined, all technical and scientific terms used herein have the same meaning as commonly understood by those skilled in the field the present invention belongs to. When the definition of a term in the present description conflicts with the meaning as commonly understood by those skilled in the field the present invention belongs to, the definition described herein shall apply.

Unless otherwise specified, all numerical values expressing amount of ingredients, reaction conditions and the like used in the description and claims are to be understood as being modified by the term "about". Accordingly, unless indicated to the contrary, the numerical values and parameters described herein are approximate values which are capable of being changed according to the desired performance obtained as required.

### Examples

The concept, specific structure and technical effects of the present invention will be further described below in conjunction with the examples and drawings so as to fully understand the objects, features and effects of the present invention. It will be readily understood by those skilled in the art that the examples herein are for illustrative purposes only and the scope of the present invention is not limited thereto.

### Description of some experimental instruments and apparatuses and raw materials:

Injection molding apparatus: Engel Victory1050-260 injection molding machine.

Physical foaming apparatus: Model SII-TR-10-A from Trexel Inc..
Plastic grade 1: Bayblend T85XF, wherein the PC content is 70 wt% and the ABS content is 30 wt%.
Plastic grade 2: Bayblend T65XF, wherein the PC content is 60 wt% and the ABS content is 40 wt%.

### Film model:

Film 1: a KURZ thermal transfer printing film, wherein a PET layer has a thickness of 0.025 mm, a hardened layer has a thickness of 0.01 mm, a pattern layer has a thickness of 0.01 mm, a bonding layer has a thickness of 0.015 mm and the total thickness is 0.060 mm.
Film 2: Makrofol DE 1-4, wherein a polycarbonate layer has a thickness of 0.125 mm, an ink layer has a thickness of 0.025 mm, a primer has a thickness of 0.025 mm and the total thickness is 0.175 mm.
Film 3: DNP MTIAB815, wherein a PMMA top layer has a thickness of 0.075 mm, a printing layer has a thickness of 0.025 mm, a toughened ABS bottom layer has a thickness of 0.400 mm and the total thickness is 0.50 mm.

### Comparative Example 1: using a physical foaming injection molding process and a thermal transfer printing film

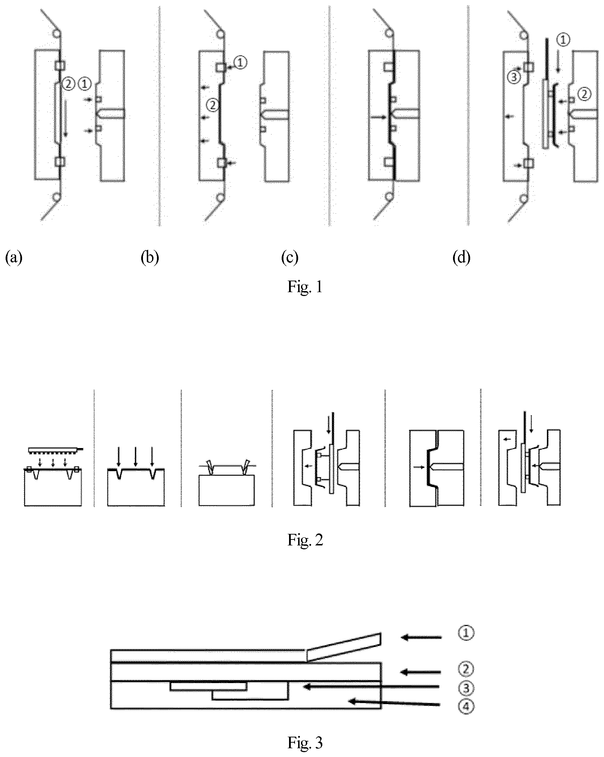

The film 1 (a thermal transfer printing film) as shown in Fig. 3 was used in this Example, wherein the PET layer had a thickness of 0.025 mm, the hardened layer had a thickness of 0.01 mm, the pattern layer had a thickness of 0.01 mm, the bonding layer had a thickness of 0.015 mm and the total thickness was 0.060 mm.

Referring to Fig. 1, a rolled thermal transfer printing film was placed in a film feeding device of an injection molding machine, and the film was covered on the surface of a mold for processing of a 350 mm X 130 mm X 25 mm car audio 3D panel. Bayblend T85XF was then injected for physical foaming injection molding (the process parameters are shown in Table 1 below), the pattern was separated from the film and transferred to the plastic in a mold cavity, and the PET film was recovered by a recovery device. After the mold was opened, an injection-molded article was taken out to obtain a lightweight decorative part printed with a pattern.

**Table 1: physical foaming injection molding process parameters**

| Material specification | Feeding measurement (mm) | Injection position (mm) | Injection speed (mm/s) | Operating pressure (bar) | Back pressure (bar) | Pressure drop (bar) | Inflation time (s) | Inflation rate (Kg/h) | Single-injection weight (g) |
|---|---|---|---|---|---|---|---|---|---|
| Bayblend T85XF | 53 | 15-40 | 20 | 185 | 180 | 10 | 5.4 | 0.23 | 143 |
| Melting temperature: 260°C; mold temperature: cavity: 40°C, core: 40°C. | | | | | | | | | |

The surface appearance of the resulting decorative part was visually observed, and micropores, flow marks and air streaks could be observed from the surface. The observation results show that the use of an in-mold thermal transfer printing process makes the thickness of a thermally transferred pattern layer to be very thin, so air streaks, flow marks and micropores on the surface of a plastic body cannot be effectively covered. The micropores are traces formed on the surface after micropores formed in a melt due to physical foaming are broken. The flow marks are traces formed by the uneven flow of the melt in the mold cavity after physical foaming. The air streaks are formed by the escape of gas in the melt from the surface after physical foaming.

### Comparative Example 2: using a physical foaming injection molding process and a polycarbonate film

The film 2 (Makrofol DE 1-4) was used in this Example, wherein the polycarbonate layer had a thickness of 0.125 mm, the ink layer had a thickness of 0.025 mm, the primer had a thickness of 0.025 mm and the total thickness was 0.175 mm.

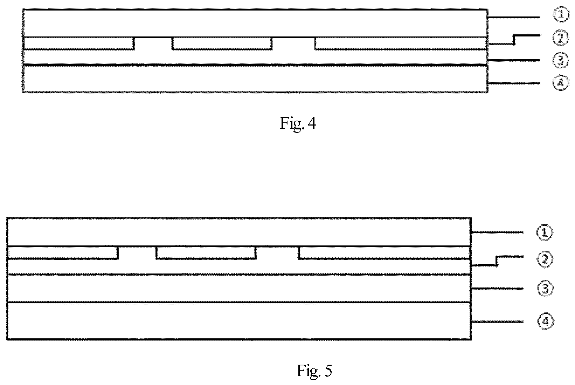

Referring to Fig. 2, a film fixed on a machine was heated to 150°C for 20s to soften the film and then fed between upper and lower cavities of a mold for processing of a 350 mm X 130 mm X 25 mm car audio 3D panel. The film was adhered to the surface of the mold by vacuum forming, and then the film was processed into the shape of a plastic body required for an application. The formed film was taken out and placed on a punching die to remove excess scrap edges. The punched film was placed in a cavity of the injection mold, and then Bayblend T85XF was injected for physical foaming injection molding, the process parameters thereof are the same as those in Comparative Example 1. After the injection molding was completed, the injection mold was opened, and an injection-molded article was taken out to obtain a lightweight decorative part for vehicle interior trim, the cross-sectional structure thereof is as shown in Fig. 4.

The surface appearance of the resulting decorative part was visually observed, and micropores and flow marks could be observed from the surface. The observation results show that air streaks on the surface of the plastic body of the resulting decorative part are covered, but some micropores and flow marks on the surface are not effectively covered.

### Example 1: using a physical foaming injection molding process and an INS multilayer composite film

The film 3 (DNP MTIAB815) was used in this Example, wherein the PMMA top layer had a thickness of 0.075 mm, the printing layer had a thickness of 0.025 mm, the toughened ABS bottom layer had a thickness of 0.400 mm and the total thickness was 0.50 mm.

Referring to Fig. 2, a film fixed on a machine was heated to 150°C for 20s to soften the film and then fed between upper and lower cavities of a mold for processing of a 350 mm X 130 mm X 25 mm car audio 3D panel. The film was adhered to the surface of the mold by vacuum forming, and then the film was processed into the shape of a plastic body required for an application. The formed film was taken out and placed on a punching die to remove excess scrap edges. The punched film was placed in a cavity of the injection mold, and then Bayblend T85XF was injected for physical foaming injection molding, the process parameters thereof are the same as those in Comparative Example 1. After the injection molding was completed, the injection mold was opened, and an injection-molded article was taken out to obtain a lightweight decorative part for vehicle interior trim, the cross-sectional structure thereof is as shown in Fig. 5.

The surface appearance of the resulting decorative part was visually observed, and no micropore, flow mark, air streak or welding line was observed from the surface. The observation results show that the product meets the surface quality requirements of decorative parts for vehicle interior trim.

### Comparative Example 3: using a standard injection molding process and an INS multilayer composite film

Comparative Example 3 was carried out with reference to Example 1, except that molding was carried out using standard injection molding process parameters listed in Table 2 below.

**Table 2: standard injection molding process parameters**

| Material specification | Feeding measurement (mm) | Injection position (mm) | Injection speed (mm/s) | Injection molding pressure (bar) | Cavity pressure (bar) | Back pressure (bar) |
|---|---|---|---|---|---|---|
| Bayblend T85XF | 53 | 15-40 | 20 | 800 | 650 | 100 |
| Melting temperature: 260°C; mold temperature: cavity: 40°C, core: 40°C. | | | | | | |

The surface appearance of the resulting decorative part was visually observed, and obvious shrink marks could be observed from the surface.

### Example 2: using a physical foaming injection molding process and an INS multilayer composite film

The film 3 (DNP MTIAB815) was used in this Example, wherein the PMMA top layer had a thickness of 0.075 mm, the printing layer had a thickness of 0.025 mm, the ABS bottom layer had a thickness of 0.40 mm and the total thickness was 0.50 mm.

Referring to Fig. 2, a film fixed on a machine was heated to 150°C for 20s to soften the film and then fed between upper and lower cavities of a mold for machining a 350 mm X 130 mm X 25 mm car audio 3D panel. The film was adhered to the surface of the mold by vacuum forming, and then the film was processed into the shape of a plastic body required for an application. The formed film was taken out and placed on a punching die to remove excess scrap edges. The punched film was placed in a cavity of the injection mold, and then Bayblend T65XF was injected for physical foaming injection molding, the process parameters thereof are the same as those in Comparative Example 1. After the injection molding was completed, the injection mold was opened, and an injection-molded article was taken out to obtain a lightweight decorative part for vehicle interior trim, the cross-sectional structure thereof is as shown in Fig. 5.

The surface appearance of the resulting decorative part was visually observed, and no micropore, flow mark, air streak or welding line was observed from the surface. The observation results show that the product meets the surface quality requirements of decorative parts for vehicle interior trim.

### Comparative Example 4: using a standard injection molding process and an INS multilayer composite film

Comparative Example 4 was carried out with reference to Example 2, except that molding was carried out using standard injection molding process parameters in Table 3 below.

**Table 3: standard injection molding process parameters**

| Material specification | Feeding measurement (mm) | Injection position (mm) | Injection speed (mm/s) | Injection molding pressure (bar) | Cavity pressure (bar) | Back pressure (bar) |
|---|---|---|---|---|---|---|
| Bayblend T65XF | 53 | 15-40 | 20 | 800 | 650 | 100 |
| Melting temperature: 260°C; mold temperature: cavity: 40°C, core: 40°C. | | | | | | |

The surface appearance of the resulting decorative part was visually observed, and obvious shrink marks could be observed from the surface.

### Example 3: content of residual compound monomers

Gas chromatography was used in this Example to test the content of residual compound monomers of the decorative parts obtained in Comparative Examples 3 and 4 as well as Examples 1 and 2. The lower the monomer content, the lower the volatile organic content and the smaller the negative impact on the air quality inside a vehicle. The test results are shown in Table 4 below.

**Table 4: comparison of residual monomer content in different injection molding processes and foaming processes (unit: ppm)**

| | Comparative Example 3 | Example 1 | Comparative Example 4 | Example 2 |
|---|---|---|---|---|
| Plastic grade/ molding process | Bayblend T85XF /standard injection molding | Bayblend T85XF /foaming injection molding | Bayblend T65XF /standard injection molding | Bayblend T65XF /foaming injection molding |
| Residual butadiene | 27.6 | 4.7 | 28 | 3.4 |
| Residual acrylonitrile | 8.5 | 2.1 | 5.6 | 3.3 |
| Residual ethylene-cyclohexene | 55.6 | 37.6 | 15.0 | 12.4 |
| Residual ethylbenzene | 11.6 | 9.2 | 9.9 | 8.6 |
| Residual chlorobenzene | 0.0 | 0.0 | 0.0 | 0.0 |
| Residual styrene | 155.5 | 116.2 | 203.2 | 171.4 |
| Total residual amount | **258.8** | **169.7** | **261.7** | **198.9** |

The test results can show that even with the same grade and batch of materials, the total residual monomer amount of the parts obtained by the physical foaming injection molding process is significantly lower than that of the parts obtained by the standard injection molding process, indicating that the physical foaming injection molding process better meets the requirements on air quality inside a vehicle.

### Example 4: high temperature cycle performance test

The decorative part obtained in Example 1 was subjected to a high temperature cycle test in accordance with the technical specification for materials MS311-11 in Kia Motors to detect whether the resulting decorative part had degumming, cracking or foaming at a high temperature. The test conditions and requirements are shown in Table 5 below.

**Table 5: high temperature cycle test conditions and requirements**

| Test item | Test purpose | Test conditions | Test results |
|---|---|---|---|
| High temperature test | Checking whether the product has degumming after the high temperature test | 85°C and 7 h | The product has no degumming and cracking after testing at 85 □ for 72 h. |

Upon visual inspection, the decorative part obtained in Example 1 met the use requirements.

### Example 5: adhesion test

The adhesion between a plastic body and a film was tested using a cross-cut method. After the high temperature cycle test described in Example 4, the film surface of the decorative part obtained in Example 1 was cross-cut using a cross-cut tester according to the method and requirements in the following table (requiring that the lattice size was equal and the spacing was 2 mm), then a 3M tape specified in the standard was bond at a cross-cut portion for tearing, and finally the cross-cut level was judged according to the standard. G0 is the best level and G6 is the worst level. The test method and requirements are shown in Table 6 below.

**Table 6: test method and requirements for adhesion after high temperature cycle test**

| Test item | Test purpose | Test conditions | Test results |
|---|---|---|---|
| Adhesion of paint film | A cross-cut test is carried out after a high temperature of 85 □ for 72 h to detect the adhesion of the product. | Section 4.7 in MS 311-11:2009 & section 4.7 in MS 200-42:2009 & ISO 2409: 2013 Requirements in the standard: cross-cut spacing: 2 mm test tape: 898 | Adhesion level: M-1.0 |

The results show that the test result is G1, which fully meets the requirements of automotive OEMs on the adhesion between a plastic body and a film.

### Example 6: assembly performance test

A standard screw was assembled on a self-tapping screw hole of the plastic body of the decorative part obtained in Example 1, and the plastic body was fixed on a base. A specific drawing machine (SE 9603SP) was used to grab a screw head, and pull the screw head up vertically with a pulling force of 50 kg at an uniform speed. Observation was made whether the screw was pulled out, if yes, the height of pullout needed to be recorded. Tests show that all standard screws are not pulled loose after a pulling force of 50 Kg. This shows that the production method of the present invention does not have any negative impact on the assembly structure of the decorative part, thus fully meeting the assembly requirements of vehicle OEMs.

The above examples of the present invention indicate that a lightweight decorative part for vehicle interior trim can be produced by a combination of a physical foaming injection molding process and an insert-mold process, which has excellent appearance while meeting the functional requirements of decorative parts for automotive interior trim, and therefore can be widely used in the field of parts for automotive interior trim.

The exemplary embodiments or examples of the present invention have been described above, but are not intended to limit the present invention. For those skilled in the art, various modifications and changes can be made to the present invention. Any modification, equivalent replacement and improvement, etc. made within the spirit and principle of the present invention shall be included within the scope of the claims of the present invention.

## Claims

1. A method for producing a decorative part for vehicle interior trim, comprising the following steps:
I) a softened decorative film is adhered to an inner surface of a decorative part mold and molded into a decorative film having the shape of a decorative part, wherein the decorative film has a thickness of at least 0.2 mm;
II) scrap edges of the decorative film having the shape of the decorative part are removed;
III) the decorative film having the shape of the decorative part from which the scrap edges have been removed is placed again in the decorative part mold and adhered to the inner surface of the decorative part mold; and
IV) a body material of the decorative part is injected into the decorative part mold by a physical foaming injection molding process and molded into the decorative part together with the decorative film.

2. The method according to claim 1, further comprising the step of softening the decorative film.

3. The method according to claim 1 or 2, wherein the decorative part mold comprises a melt injection port through which the body material is injected and a flow passage through which the body material flows after injection, wherein the melt injection port has a diameter of less than 2.5 mm and the flow passage has a diameter of less than 7.5 mm.

4. The method according to any one of claims 1 to 3, wherein the body material is a polycarbonate/acrylonitrile-butadiene-styrene copolymer blend.

5. The method according to claim 4, wherein the polycarbonate/acrylonitrile-butadiene-styrene copolymer blend comprises 50-70 wt% of a polycarbonate and 30-50 wt% of an acrylonitrile-butadiene-styrene copolymer based on the total weight of the blend.

6. The method according to any one of claims 1 to 5, wherein the decorative film has a thickness of 0.3-1.0 mm.

7. The method according to any one of claims 1 to 6, wherein the decorative film is a multilayer structure which sequentially comprises a bottom layer contacting a body, an intermediate layer and a top layer.

8. The method according to claim 7, wherein the bottom layer has a thickness of 0.2-0.9 mm.

9. The method according to claim 7 or 8, wherein the bottom layer is made of ABS material.

10. The method according to any one of claims 7 to 9, wherein the intermediate layer has a thickness of 0.02-0.1 mm.

11. The method according to any one of claims 7 to 10, wherein the intermediate layer is an ink layer formed of an ink coating.

12. The method according to any one of claims 7 to 11, wherein the top layer is a transparent protective layer.

13. The method according to any one of claims 7 to 12, wherein the top layer is made of an acrylic polymer.

14. A decorative part for vehicle interior trim obtained by the method according to any one of claims 1 to 13.
